# EUROPÄISCHE PATENTANMELDUNG

(11) **EP 0 865 748 A1**
(43) Veröffentlichungstag der Anmeldung: **23.09.1998**
(21) Anmeldenummer: 97121879.7
(22) Anmeldetag: 11.12.1997
(51) Int. Cl.: A47J 31/06

(54) **Espressobrühkopfeinheit**

(30) Priorität: 17.03.1997 DE 19711025
(71) Anmelder: MAXS AG, CH-6072 Sachseln (CH)
(72) Erfinder: Gasser, Ruedy, 6077 Bürglen (CH); Strub, Jürg, 6315 Oberägeri (CH)
(74) Vertreter: Grünecker, Kinkeldey, Stockmair & Schwanhäusser Anwaltssozietät

(57) **Zusammenfassung**

Die vorliegende Erfindung bezieht sich auf eine Espressobrühkopfeinheit mit Verschlußeinrichtungen (12) zum lösbaren Befestigen an einer Brüheinheit einer Espressomaschine. Allgemein soll eine Filtereinrichtung für eine Espressomaschine verbessert werden. Hierzu weist die Espressobrühkopfeinheit einen topfförmigen Kaffeeaufnahmebehälter (1) aus Kunststoff auf, an dessen Boden eine Filterplatte (3) mit Kaffeeaustrittsöffnungen (11) vorgesehen ist und in dessen oberen Randbereich der Seitenwandung im wesentlichen umlaufend ein Verstärkungsring (2) aus einem stabilen Werkstoff, bevorzugt Metall, fest eingebettet ist und der Verstärkungsring Anformungen (14) aufweist, die Bestandteil der Verschlußeinrichtungen sind.

## Beschreibung

Die vorliegende Erfindung bezieht sich auf eine Espressobrühkopfeinheit mit Verschlußeinrichtungen zum lösbaren Befestigen an einer Brüheinheit einer Espressomaschine.

Die bisher üblichen Filtereinheiten für Espressomaschinen weisen in aller Regel eine mit einem radial abstehenden Handgriff versehene Brühschale auf, in die ein topfförmiger Filtereinsatz eingesetzt wird. Solch eine Vorrichtung ist z.B. aus der DE-AS 12 43 359 bekannt. Die Brühschale ist mit schraubenförmig verlaufenden Stegabschnitten versehen, die Teil einer bajonettartigen Verbindung mit der Brüheinheit der Espressomaschine sind. Das Kaffeepulver wird in den topfförmigen Filtereinsatz eingefüllt, während dieser in der Brühschale angeordnet ist und dessen Rand flanschartig auf einer Oberkante der Brühschale aufliegt. Durch Einführen der schraubenförmigen Stegabschnitte in die entsprechende Bajonettaufnahme an der Brüheinheit und anschließendem Drehen der Brühschale wird der Bajonettverschluß in seine Arretierstellung gebracht. Aufgrund der schraubenförmigen Stege erfolgt durch die Drehbewegung der Brühschale gleichzeitig eine Aufwärtsbewegung, so daß der flanschartige Rand des Filtereinsatzes gegen eine Dichtung gedrückt wird. Die Brühschale mit den schraubenförmigen Stegabschnitten wird aus Festigkeitsgründen im Stand der Technik aus Metall hergestellt. Eine derartige Ausführung wird bei den meisten im Einsatz befindlichen Espressomaschinen angewandt. Die Brühschale aus Metall wird entweder durch Tiefziehen oder durch Druckgußverfahren hergestellt.

Aus der DE-OS 44 36 080 ist ein Siebkorbträger bekannt geworden, in den in üblicher Weise ein topfförmiger Dauerfiltereinsatz eingesetzt wird. Da die dort beschriebene Espressomaschine mit einem Druckkolben arbeitet ist eine Überdrucksicherung derart vorhanden, daß sich die einzelnen Bauteile relativ so zueinander verschieben, daß eine Entlastungsöffnung freigegeben wird, durch die dann das Medium druckentlastend abströmen kann.

Für diesen Vorgang sollen möglichst elastische Werkstoffe zum Einsatz kommen. Jedoch ist nicht genau beschrieben, welche Bauelemente z.B. aus Kunststoff bestehen sollen. Bei dieser Vorrichtung wird kein bajonettartiger Verschluß benötigt, da die Abdichtung über die Dichtungslippe am Kolben erfolgt.

Es ist nunmehr die Aufgabe der vorliegenden Erfindung eine Filtereinheit für Espressomaschinen bereitzustellen, die einfacher und kostengünstiger zu fertigen ist und auch dem häufigen Lösen und Befestigen an einer Brüheinheit einer Espressomaschine standhält.

Diese Aufgabe wird durch eine Espressobrühkopfeinheit mit Verschlußeinrichtung zum lösbaren Befestigen an einer Brüheinheit einer Espressomaschine bereitgestellt, der einen topfförmigen Kaffeeaufnahmebehälter aus Kunststoff aufweist, an dessen Boden eine Filterplatte mit Kaffeeaustrittsöffnungen vorgesehen ist und in dessen oberen Randbereich der Seitenwandung, im wesentlichen umlaufend ein Verstärkungsring aus einem stabilen Werkstoff, bevorzugt Metall, fest eingebettet ist und der Verstärkungsring Anformungen aufweist, die Bestandteil der Verschlußeinrichtungen sind.

Bislang ist es unüblich bei Brüheinheiten für Espressomaschinen diese einteilig auszubilden. Von dem Prinzip des zweiteiligen Aufbaus, bestehend aus Brühschale und Filtertopfeinsatz wurde bislang nicht abgewichen. Der Grund ist darin zu sehen, daß bei Espressomaschinen relativ hohe Drücke auftreten, die von dieser Einheit abgefangen werden müssen. Darüber hinaus müssen die Verschlußeinrichtungen an der Brühschale dem häufigen Lösen und Befestigen der Brüheinheit der Espressomaschine gewachsen sein, weshalb eine Metallausführung im Stand der Technik Standard ist.

Durch die Erfindung wird nun erstmalig eine Espressobrühkopfeinheit bereitgestellt, der sich sehr einfach spritzgußtechnisch aus Kunststoff herstellen läßt, aber dennoch ausreichende Festigkeitseigenschaften aufweist. Der Erfinder hat erkannt, daß im wesentlichen der obere Rand des Kaffeeaufnahmebehälters stabil ausgebildet werden muß, damit in diesem Bereich nur geringste Verformungen stattfinden, so daß eine gute Abdichtung in diesem Bereich erfolgen kann. Dies geschieht durch einen unter Verwendung üblicher Verfahren, z.B. Spritzgußtechnik, eingebetteten Metallring, der für die nötige Stabilität sorgt. Darüber hinaus verfügt der Metallring über Anformungen, die auch die Verschlußeinrichtungen verstärken, so daß der ansonsten im wesentlichen aus Kunststoff bestehende Kaffeeaufnahmebehälter die erforderliche Lebensdauer auch bei hohen Löseund Befestigungszyklen ohne weiteres aushält. Zusätzlich entfällt für den Benutzer der erfindungsgemäßen Espressobrühkopfeinheit das ständige Herausnehmen und separate Reinigen eines topfförmigen Dauerfiltereinsatzes, der beim Ausklopfen des benutzten Kaffeepulvers zwangsläufig aus der Brühschale herausfällt. Die Reinigung der erfindungsgemäßen Espressobrühkopfeinheit gestaltet sich dahingegen viel einfacher. Zu vernachlässigen ist auch nicht die zu erwartende Senkung der Fertigungskosten bei erfindungsgemäßen Espressobrühkopfeinheiten. Z.B. braucht kein topfförmiger Filterdauereinsatz mehr tiefgezogen oder anderweitig separat hergestellt zu werden.

Besonders günstig läßt sich bei einer Ausführungsform der Verstärkungsring durch den Spritzgußvorgang des Kaffeeaufnahmebehälters in den Randbereich einbetten. Hierdurch wird eine sehr innige Verbindung zwischen Verstärkungsring und Kaffeeaufnahme-behälter erzielt, die den dauerhaften Belastungen bestens Stand hält.

Insbesondere wenn die Anbringung der Espressobrühkopfeinheit nicht über ein Gewinde an die Brüheinheit sondern über einen Bajonettverschluß erfolgt, können die Verschlußeinrichtungen als radial von der Außenwandung des Verstärkungsrings abstehende Vorsprünge ausgebildet sein, die Bestandteil des bajonettartigen Verschlusses mit der Brüheinheit der Espressomaschine sind. An der Brüheinheit befindet sich dann das entsprechende Aufnahmeelement-des bajonettartigen Verschlusses, in das die Verschlußeinrichtungen an der Espressobrühkopfeinheit eingeführt werden können. Derartige bajonettartige Verschlüsse haben den Vorteil, daß sich durch entsprechende Ausgestaltung relativ genaue Abdichtungsbedingungen, z.B. durch entsprechende Anschläge, erzielen lassen. Eine derartig ausgestaltete Espressobrühkopfeinheit ließe sich auch ohne weiteres als Nachrüstelement für bereits vorhandene Espressomaschinen verwenden.

Kostengünstig herzustellen ist der Verstärkungsring bei einer Ausführungsform dadurch, daß er im wesentlichen die Form eines zylindrischen Rohres aufweist. Hier lassen sich bei entsprechender Ausgestaltung vorhandene Rohre verwenden, die lediglich auf Länge zugeschnitten werden müssen.

Da ein entsprechend symmetrischer Aufbau von Vorteil ist, kann der Randbereich ebenfalls einen kreisringförmigen Querschnitt aufweisen und der Verstärkungsring koaxial zum Randbereich angeordnet sein. Diese Ausführungsform zahlt sich insbesondere bei Gewinde- oder Bajonettverschlüssen aus.

Der Verstärkungsring selbst kann als Anpreßmedium zum Andrücken an eine Dichtung verwendet werden, wenn gemäß einer Ausführungsform die nach oben weisende Randkante des Verstärkungsrings über den oberen Rand des Kaffeeaufnahmebehälters übersteht. Dabei ist mit oberer Rand des Kaffeeaufnahmebehälters der Randabschnitt gemeint, der unmittelbar die Brühkammer umgibt.

Um eine möglichst gleichmäßige Innenoberfläche des Kaffeeaufnahmebehälters zu erlangen, kann die unterhalb des oberen Randes des Kaffeeaufnahmebehälters angeordnete Innenseite des Verstärkungsrings vollflächig mit einer Kunststoffschicht abgedeckt sein. Was bedeutet, daß der Verstärkungsring jeweils im Abstand zur Brühkammer um den Betrag der Kunststoffschichtdicke angeordnet ist.

Damit eine möglichst ästhetische Einbettung des Verstärkungsringes erfolgt und die Belastungen beim Lösen und Befestigen der Einheit, insbesondere was die Verschleißerscheinungen angeht, nicht auf den Verstärkungsring übertragen werden, ist bei einer Ausführungsform die unterhalb des oberen Randes des Kaffeeaufnahmebehälters angeordnete Außenseite des Verstärkungsrings, einschließlich der Anformungen, im wesentlichen vollflächig mit einer Kunststoffschicht abgedeckt. Dadurch, daß die Anformungen bzw. die Verschlußeinrichtungen durch diese Maßnahme auf ihrer Außenseite eine Kunststoffschicht aufweisen, ergeben sich gute Verschleißeigenschaften, da günstige Reibungskoeffizienten vorliegen. Diese Kunststoffschichten können durch die in ihnen eingebettete Metalleinlage in Form der Anformungen ohne weiteres die entsprechenden Belastungen aufnehmen.

Bevorzugt können die Anformungen am Verstärkungsring als im wesentlichen kreisbogenförmige Arretierstege ausgebildet sein, die im wesentlichen senkrecht auf der Außenfläche des Verstärkungsrings angeordnet sind und radial abstehen. Dabei ist es noch nicht einmal notwendig, daß diese kreisbogenförmigen Arretierstege einen für einen Bajonettverschluß günstigen schraubenförmigen Verlauf aufweisen, da diese gemäß einer Ausführungsform mit Kunststoff überziehbar sind, so daß der Kunststoff entsprechend schraubenförmig verlaufend ausgeformt wird, während die Arretierstege in einer Radialebene des Verstärkungsringes verlaufen.

Günstigerweise kann die bevorzugt aus Metall bestehende Filterscheibe mit ihrem Randbereich ebenfalls durch Spritzgießen in der Seitenwandung des Kaffeeaufnahmebehälters eingebettet sein. Die Ausbildung einer stabilen Filterscheibe mit möglichst scharfkantigen Filteröffnungen ist zur Erzeugung einer feinen Crema bei Espressofiltereinheiten von großem Vorteil. Gemäß dieser Ausführungsform wird die Filterscheibe auf einfache Weise sehr innig mit dem übrigen Kaffeeaufnahmebehälter verbunden.

Bei einer weiteren Ausführungsform ist der Rand der Filterscheibe in einem separaten Kunststoffrahmen eingebettet, der in einen umlaufenden Stufenabsatz auf der Innenseite des Kaffeeaufnahmebehälters eingesetzt ist. Der Kunststoffrahmen bietet die Möglichkeit, auch relativ kompliziert aufgebaute Filterscheiben mit zusätzlichen Abstützelementen und Verteilerscheiben in dem Kaffeeaufnahmebehälter zu integrieren.

Vorteilhafterweise kann der Kunststoffrahmen nicht auswechselbar sondern fest mit dem Kaffeeaufnahmebehälter verbunden sein, wodurch eine Abdichtung nicht notwendig ist.

Es besteht auch die Möglichkeit, daß zur Vergrößerung der Auflagefläche des Stufenabsatzes die Innenwandung des Kaffeeaufnahmebehälters eine umlaufende Stützrippe bildet. Diese erstreckt sich radial einwärts und untermauert die Fähigkeit auch die hohen Druckkräfte, die auf die Filterscheibe und somit den Rahmen wirken, aufzunehmen.

Eine weitere Ausführungsform sieht vor, daß unterhalb der Filterscheibe der Kaffeeaufnahmebehälter rohrförmig ausgebildet ist und/oder ein nach unten weisenden Ringsteg aufweist, auf den eine Verteilerscheibe mit einem Aufsteckkragen aufgesetzt ist, die eine gewünschte Anzahl an Austrittsöffnungen aufweist. Zum einen läßt sich durch diese Ausgestaltung die Filterscheibe von beiden Seiten sehr einfach reinigen, da die Verteilerscheibe abgenommen werden kann und zum anderen weist die Verteilerscheibe, abhängig von der Anzahl der unter ihr angeordneten Trinkgefäße, Austrittsöffnungen auf. Üblicherweise werden Verteilerscheiben mit lediglich einer Austrittsöffnung oder zwei Austrittsöffnungen verwendet.

Eine besonders einfache Handhabung ergibt sich bei einer Ausführungsform dadurch, daß seitlich an der Außenfläche des Kaffeeaufnahmebehälters ein im wesentlichen radial abstehendes Griffteil angeordnet ist.

Um die Wandung des Kaffeeaufnahmebehälter dünner ausbilden zu können, kann der Kunststoffwerkstoff ein verstärkter, insbesondere glasverstärkter, Kunststoff sein. Aber auch jede andere im Kunststoff denkbare Verstärkung ist möglich. Bekannt geworden sind insbesondere Verfahren, bei denen kleine Glaskugeln bzw-körper in der Kunststoffmasse angeordnet und beim Spirtzgußvorgang mit eingespritzt werden. Bei einem bestimmten Verfahren werden die Glaskörper aufgeschmolzen und bilden ein inniges Gittergefüge.

Des weiteren besteht auch die Möglichkeit, daß der Verstärkungsring aus einem Metalldruckguß besteht. Hierdurch ist der Verstärkungsring ebenfalls einfach herstellbar. Darüber hinaus läßt diese Herstellungsart auch jegliche Ausgestaltung der Anformungen zu, so daß der Bajonettverschluß z.B. komplett aus Metalldruckguß geformt sein kann.

Günstigerweise kann der Verstärkungsring an seinem unteren Randbereich Verankerungsmittel zum Verankern um Kunststoff durch einen Spritzgußvorgang aufweisen. Hierdurch wird der Verstärkungsring nochmals in der Kunststoffeinbettung verankert, so daß er sich selbst bei Aufbringen relativ großer Kräfte nicht lösen kann.

Die Verankerungsmittel können z.B. durch eine konische Ausformung der Innen- und/oder Außenseite des unteren Randbereichs gebildet sein. Durch die konische Ausgestaltung wird insbesondere einer in Achsrichtung des Verstärkungsring wirkenden Kraft ein entsprechender Verankerungswiderstand entgegengesetzt.

Um auch eine ausreichende Verankerung gegen Verdrehung des Verstärkungsringes zu gewährleisten, können als Verankerungsmittel eine Verzahnung am unteren Randbereich vorgesehen sein, in die dann die Kunststoffumspritzung eindringt und den Verstärkungsring entsprechend arretiert.

Im folgenden werden Ausführungsbeispiele der vorliegenden Erfindung anhand einer Zeichnung näher erläutert. Es zeigen:
- Fig. 1: eine Espressobrühkopfeinheit gemäß der vorliegenden Erfindung, wobei der Kaffeeaufnahmebehälter im Halbschnitt und das Griffteil unvollständig dargestellt ist,
- Fig. 2: die Espressobrühkopfeinheit aus Figur in einer Draufsicht.,
- Fig. 3: die Espressobrühkopfeinheit aus Figur 1 in einer Sei-tenansicht und im Vollschnitt,
- Fig. 4: die Filterplatte aus Figur 1 in einer Draufsicht,
- Fig. 5: die Filterplatte aus Figur 4 in einer Seitenansicht,
- Fig. 6: den Ausschnitt VI in Figur 5 der Filterplatte in vergrößerter Darstellung,
- Fig. 7: die Verteilerscheibe aus Figur 1 im Vollschnitt,
- Fig. 8: die Verteilerscheibe aus Figur 7 in einer Draufsicht und teilweise weggeschnitten,
- Fig. 9: den Verstärkungsring aus Figur 3 im Vollschnitt,
- Fig. 10: den Verstärkungsring aus Figur 9 in einer Draufsicht,
- Fig. 11: eine erste Variante der Espressobrühkopfeinheit im Vollschnitt ähnlich Figur 3,
- Fig. 12: die Stützplatte aus Figur 11 im Vollschnitt,
- Fig. 13: die Stützplatte aus Figur 12 in einer Draufsicht,
- Fig. 14: eine zweite Variante der Espressobrühkopfeinheit im Vollschnitt ähnlich Figur 3,
- Fig. 15: eine dritte Variante einer Espressobrühkopfeinheit im Vollschnitt ähnlich Figur 3,

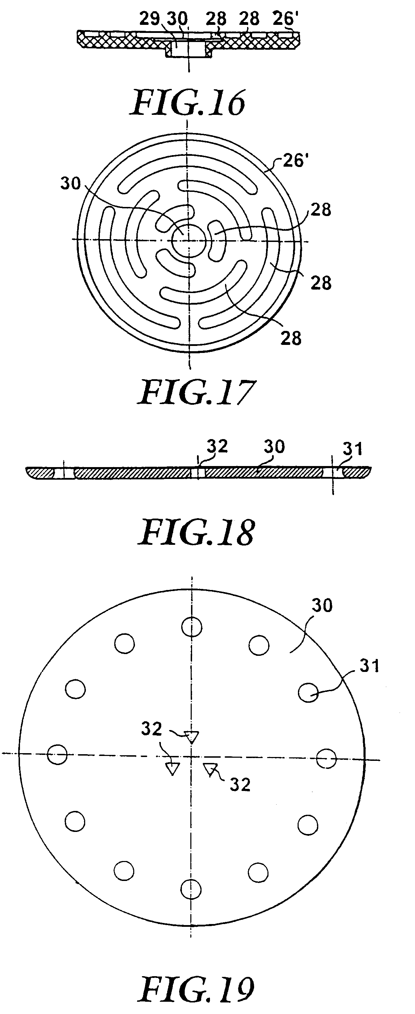

- Fig. 16: die Stützplatte aus Figur 15 mit zusätzlicher kleiner Filterplatte im Vollschnitt,
- Fig. 17: die Stützplatte aus Figur 16 in einer Draufsicht,
- Fig. 18: die kleine Filterplatte aus Figur 16 im Vollschnitt und in vergrößerter Darstellung,
- Fig. 19: die kleine Filterplatte aus Figur 18 in einer Draufsicht,
- Fig. 20: eine vierte Variante einer Espressobrühkopfeinheit im Vollschnitt ähnlich Figur 14,
- Fig. 21: den Verstärkungsring aus Figur 20 in einer gedrehten, teilweise geschnitten Seitenansicht,
- Fig. 22: eine Variante des unteren Randbereiches des Verstärkungsringes und
- Fig. 23: eine weitere Variante des unteren Randbereiches des Verstärkungsringes.

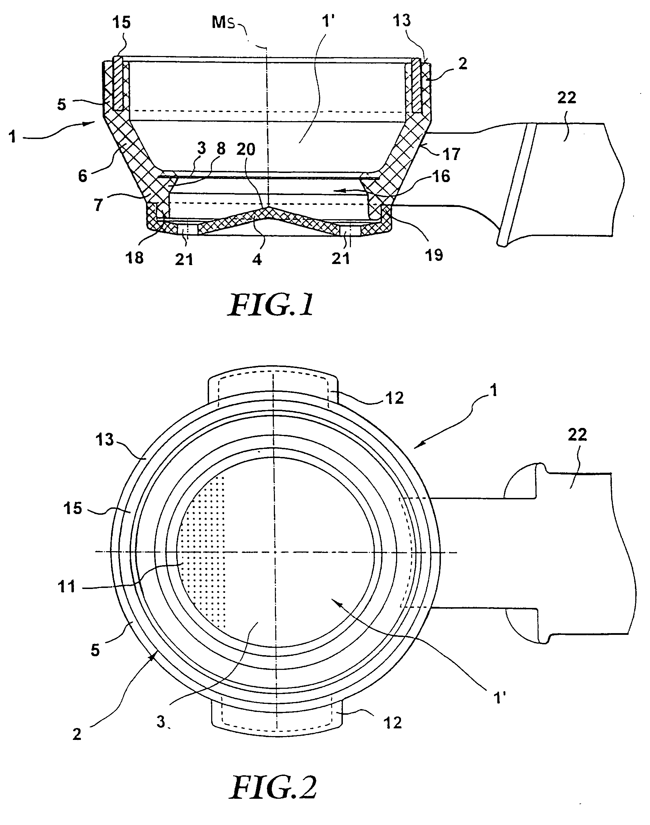

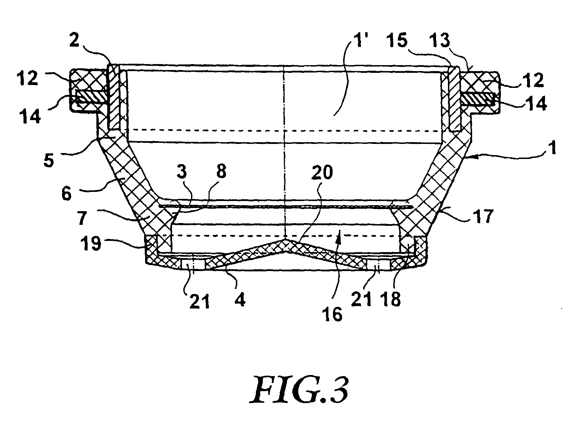

Bezugnehmend auf die Figuren 1 bis 10 wird im folgenden eine ersten Ausführungsvariante der erfindungsgemäßen Espressobrühkopfeinheit näher beschrieben.

Die Espressobrühkopfeinheit umfaßt im wesentlichen einen im Querschnitt kreisförmigen Kaffeeaufnahmebehälter 1 aus Kunststoff, einen in diesen eingebetteten, zylinderförmigen Verstärkungsring 2 aus Metall, bevorzugt Stahl, eine den Boden des Kaffeeaufnahmebehälters 1 bildende, kreisförmige ebene Filterplatte 3 und eine unterhalb der Filterplatte 3 am Kaffeeaufnahmebehälter 1 angebrachte Verteilerscheibe 4.

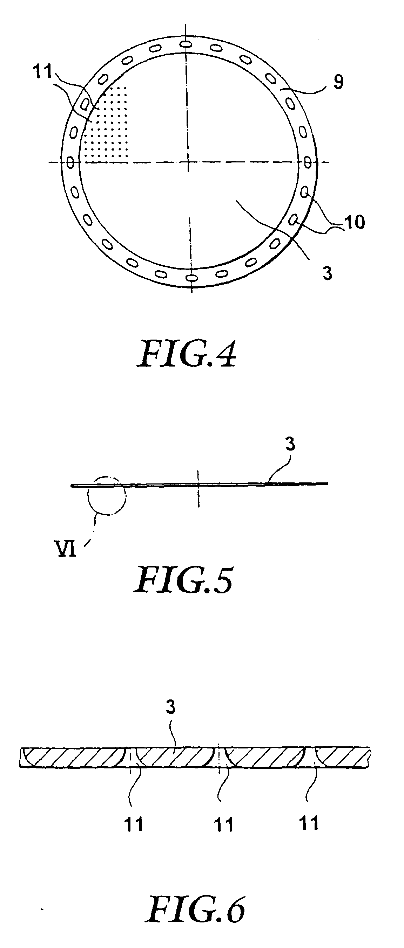

Der Kaffeeaufnahmebehälter 1 ist in seinem oberen Randbereich 5 zylinderrohrförmig ausgebildet und geht dann in einen konischen Bereich 6 über, der an seinem unteren Endbereich 7 eine im innern umlaufende Ringrippe 8 aufweist, in der der Rand 9 der Filterscheibe 3 (siehe Figur 4) eingebettet ist. Damit sich der Kunststoff des Kaffeeaufnahmebehälters 1 beim Herstellungsvorgang besser mit der Filterplatte 3 verbindet, weist der Rand 9 mehrere versetzt zueinander angeordnete Aussparungen 10 auf. Die Filterplatte 3 verfügt darüber hinaus über eine große Anzahl von kleinen, in Strömungsrichtung diffusorförmig ausgebildeten Filteröffnungen 11. Gemäß der Figur 6 wird die Filterplatte 3 von oben nach unten durchströmt.

Der obere Randbereich 5 des Kaffeeaufnahmebehälters 1 umfaßt ferner an seinem Außenumfang zwei gegenüberliegend angeordnete Verschlußstege 12, die im wesentlichen bündig mit der Oberseite 13 des Randbereiches 5 bündig abschließen. In den Figuren ist nicht dargestellt, daß die Verschlußstege 12 zumindest eine Seite (Ober- bzw. Unterseite) aufweisen, die schraubenförmig bzw. rampenförmig verläuft. Die Verschlußstege 12 wirken mit einer entsprechenden Aufnahme einer Brüheinrichtung einer Espressomaschine nach Art eines Bajonettverschlusses zusammen.

Der koaxial zum oberen Randbereich 5 des Kaffeeaufnahmebehälter 1 angeordnete Verstärkungsring 2 weist auf Hohe der Verschlußstege 12 zwei um 180° zueinander versetzt angeordnete Arretierstege 14 auf, die senkrecht auf der Außenseite des Verstärkungsringes 2 angeordnet sind und im wesentlichen in einer radialen Ebene verlaufen. Die Arretierstege 14 erstrecken sich bereichsweise in die Verschlußstege 12 und verstärken diese nach Art einer Armierung. Es ist aber auch denkbar, daß die Arretierstege 14 gleichzeitig die Verschlußstege 12 bilden und demnach seitlich, in jeglicher Form, frei von dem Kaffeeaufnahmebehälter 1 abstehen.

Die nach oben weisende Randkante 15 des Verstärkungsrings 2 steht über die Oberseite 13 des Kaffeeaufnahmebehälters 1 um einen geringen Betrag, bevorzugt 1 bis 2 mm, über. Die Randkante 15 bildet somit einen umlaufenden Dichtungssteg. Sämtliche anderen Oberflächenbereiche des Verstärkungsringes 2, einschließlich der Arretierstege 14, sind vollständig in dem Kunststoff des Kaffeeaufnahmebehälters 1 eingebettet und allseitig mit einer entsprechenden Kunststoffschicht versehen.

Unterhalb der Filterplatte 3 ist der untere Endbereich 7 des Kaffeeaufnahmebehälters 1 zylinderrohrförmig ausgestaltet, so daß ein Flüssigkeitssammelraum 16 umgrenzt ist. Radial einwärts versetzt zur konischen Außenseite 17 ist ein umlaufender, nach unten weisender und zylinderrohrförmiger Ringsteg 18 angeordnet, auf den ein paßgenauer, umlaufender Aufsteckkragen 19 aufsteckbar ist. Der Außenumfang des Aufsteckkragens 19 schließt dann ohne Durchmesseränderung an die Außenseite 17 des unteren Endbereichs 7 an.

Die Verteilerscheibe 4 weist einen nach innen erhabenen Kegel-bereich 20 auf, an dessen Randkante sich zwei um 180° versetzt zueinander angeordnete Auslaßöffnungen 21 befinden. Die Auslaßöffnungen 21 stehen mit dem Sammelraum 16 in Verbindung und erstrecken sich durch die gesamte Dicke der Verteilerscheibe 4. Die Verteilerscheibe 4 kann sowohl lösbar auf den Ringsteg 18 aufgesteckt werden, als auch mit diesen fest verbunden sein. Andere Anbringungsarten, wie z.B. Schrauben oder ähnliches sind ebenfalls möglich.

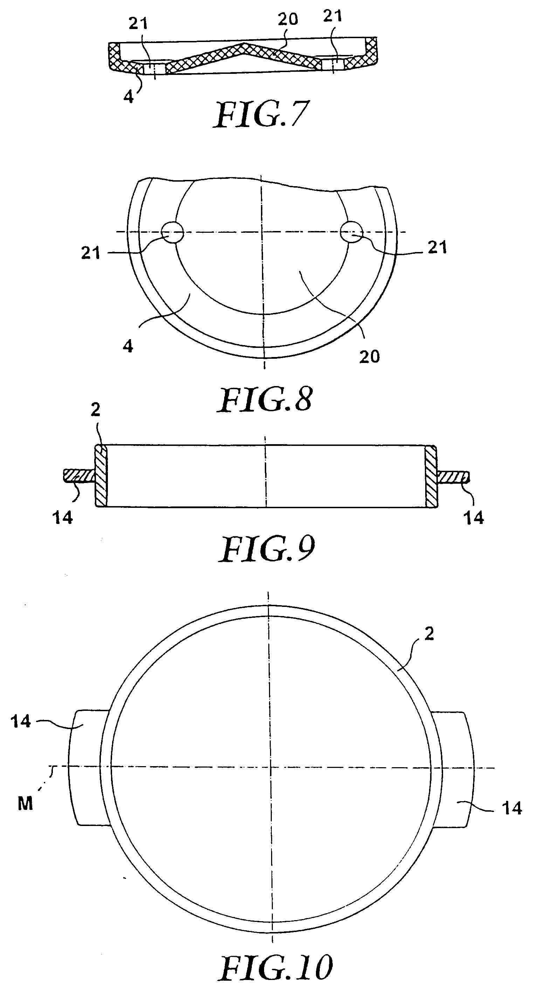

Anhand der Figur 10 ist zu erkennen, daß die beiden um 180° zueinander versetzt angeordneten Arretierstege 14 jeweils Kreisringabschnitte darstellen, die parallel zu der in Figur 10 eingezeichneten Mittellinie M abgeschnitten sind. Die Arretierstege 14 sind an der Außenfläche des Verstärkungsringes 2 jeweils über einen Bereich von ca. 40° angeordnet.

Darüber hinaus ist an der Außenseite des Kaffeeaufnahmebehälters 1 seitlich ein Stielgriff 22 angebracht, der radial bezüglich des Mittelpunktes des Kaffeeaufnahmebehälters 1 absteht. Der Stielgriff 22 kann ebenfalls aus Kunststoff, bevorzugt einteilig mit dem Kaffeeaufnahmebehälter 1, hergestellt sein.

Als Kunststoff zur Herstellung des Kaffeeaufnahmebehälters 1 kann jeglicher, die geeigneten Festigkeitswerte bereitstellender Kunststoff verwendet werden. Jedoch ist es auch möglich verstärkte Kunststoffe, insbesondere glasverstärkte, einzusetzen. Die Wandstärke des Kaffeeaufnahmebehälters 1 richtet sich entsprechend nach der gewünschten Festigkeit. Bei dem dargestellten Ausführungsbeispiel weisen der oberen Randbereich 5 und der konische Bereich 6 im wesentlichen die gleiche Materialstärke auf.

Im folgenden wird die Wirkungs- und Funktionsweise des oben beschriebenen Ausführungsbeispiels näher erläutert.

Die dargestellte Espressobrühkopfeinheit wird zur Herstellung eines Espressos an dem Stielgriff 22 ergriffen und die von dem Kaffeeaufnahmebehälter 1 umgrenzte, oberhalb der Filterplatte 1 angeordnete Kaffeeaufnahmekammer 1' wird mit Kaffeepulver gefüllt. Anschließend befestigt man die Espressobrühkopfeinheit an der Brüheinrichtung einer Espressomaschine. Hierzu werden die Verschlußstege 12 in die entsprechenden Aufnahmen der Brüheinrichtung eingeführt und nach Erreichen eines Anschlags durch eine Schwenkbewegung um die Mittelachse M_{S} des Stielgriffes 22 die Verschlußstege 12 in ihre Verriegelungsstellung gebracht. Die Verschlußstege 12 sind so ausgeformt, daß bei dieser Schwenkbewegung des bajonettartigen Verschlusses gleichzeitig eine nach oben gerichtete Axialbewegung des Kaffeeaufnahmebehälters 1 erfolgt. Hierdurch wird die nach oben weisende Randkante 15 des Verstärkungsringes 2 mit entsprechend gewünschter Kraft gegen eine Dichtung gepreßt. Durch die relativ kleine Fläche der Randkante 15 lassen sich auf einfache Weise hohe Anpreßdrücke verwirklichen, die für eine ausreichende Abdichtung sorgen. Des weiteren ist diese Art der Abdichtung zumindest von Seiten der Espressobrühkopfeinheit sehr verschleißarm, da der Verstärkungsring aus Metall, bevorzugt Edelstahl, besteht. Die Randkante 15 kann auch entsprechend abgerundet sein zu diesem Zweck.

Die Arretierstege 14 sorgen nun dafür, daß selbst bei sehr häufigen Löse- und Anbringungsvorgängen an die Brüheinrichtung eine Espressomaschine die Verschlußstege 12 keinen Ermüdungsbruch erleiden. Durch die mittels der Arretierstege 14 bereitgestellte Armierung läßt sich der gesamte Bajonettverschluß vereinfachen, da von Seiten der Espressobrühkopfeinheit weichere Kunststoffoberflächen als aufeinander gleitende Arretierflächen durch den Verschlußsteg 12 zur Verfügung stehen.

Anschließend wird durch die Brüheinrichtung Heißwasser durch das Kaffeepulver hindurchgedrückt, so daß Flüssigkeit durch die Filterplatte 3 hindurchgepreßt wird. Durch die Ausgestaltung der Filteröffnungen erfolgt ein vorteilhaftes Filtern der Flüssigkeit. Diese sammelt sich mit geringerem Druck im Flüssigkeitssammelraum 16 an und tritt durch die Auslaßöffnungen 21 aus und fließt in die Aufnahmegefäße.

Nach Fertigstellung des Espressos wird die Espressobrühkopfeinheit durch eine Schwenkbewegung mittels des Stielgriffs 22 um die Schwenkachse M_{S} wieder von der Brüheinheit gelöst und das Kaffeepulver aus der Aufnahmeöffnung 1' herausgeklopft. Bei diesem Vorgang findet kein lästiges Herausfallen eines topfförmigen Dauerfiltereinsatzes statt, da es sich hierbei um eine integrale Filtervorrichtung handelt.

Im folgenden werden Ausführungsbeispiele der Espressobrühkopfeinheit beschrieben, die sich im wesentlichen bezüglich der Anordnung der Filterplatte 3 unterscheiden. Um Wiederholungen zu vermeiden, wird nur auf die wesentlichen Unterschiede zum ersten Ausführungsbeispiel eingegangen. Für gleiche und ähnliche Bauteile werden daher gleiche Bezugsziffern verwendet.

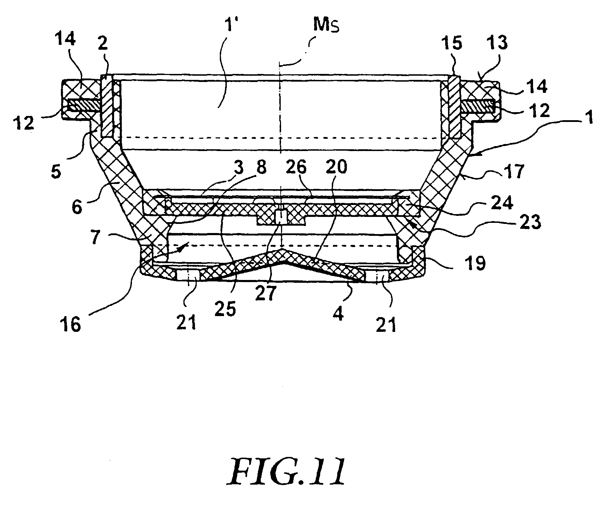

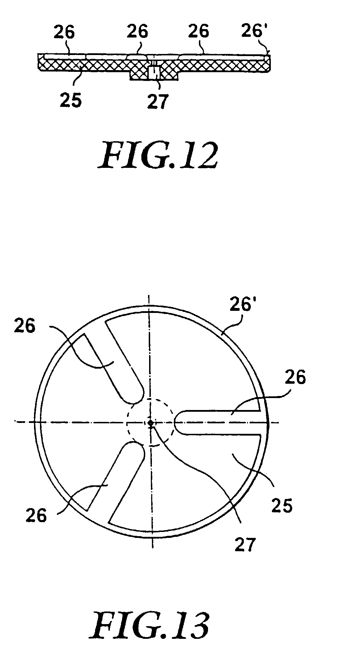

Bei der ersten Ausführungsform gemäß Figur 11 bis 13 weist der Kaffeeaufnahmebehälter 1 am unteren Ende des konischen Bereichs 6 einen Stufenabsatz 23 auf, dessen Auflagefläche von der Ringrippe 8 vergrößert ist. Die Filterplatte 3 ist in einem ringförmigen Rahmen 24 mit ihrem Rand 9 eingebettet, der im wesentlichen paßgenau im Stufenabsatz 23 angeordnet ist. Hierbei kann es sich sowohl um eine lösbare gesteckte Anordnung als auch um eine feste Anordnung, z.B. durch einen Preßsitz oder eine Klebeverbindung, handeln. Unterhalb der Filterplatte 3 ist eine ebenfalls kreisförmige Stützplatte 25 positioniert, die ebenfalls vom Rahmen 24 gehaltert wird. Die Stützplatte 25 weist auf ihrer Oberseite radial verlaufende Stege 26 und einen umlaufenden Randsteg 27 auf. Die Stege 26 enden im Abstand zu einer mittig angeordneten Austrittsöffnung 27, die für eine Diffusorwirkung gestuft, in Strömungsrichtung vergrößernd ausgeformt ist. Die Flüssigkeit wird somit unterhalb der Filterplatte 3 gesammelt und zur mittigen Austrittsöffnung 27 geleitet, wo es zur vermehrter Verwirbelung und besserer Cremaausbildung kommt. Die Stützplatte 25 ist aus diesem Grunde im mittigen Bereich verdickt ausgeführt.

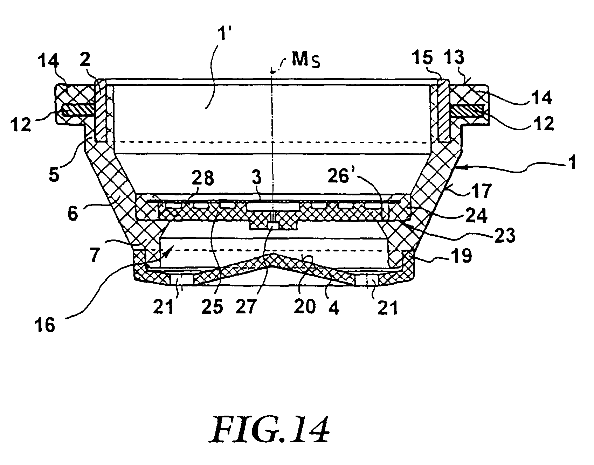

Gemäß der zweiten Ausführungsform in Figur 14 wird in ähnlicher Weise ein Rahmen 24 in einem Stufenabsatz 23 angeordnet. Jedoch ist die hier verwendete Stützplatte 25 mit labyrinthartig angeordneten Stützstegen 28 versehen, damit die Flüssigkeit einen verlängerten Strömungsweg zur Austrittsöffnung 27 nehmen muß. Die Stege 28 enden wieder im Abstand zur Austrittsöffnung 27, so daß sich die Flüssigkeit oberhalb der Austrittsöffnung 27 sammeln kann.

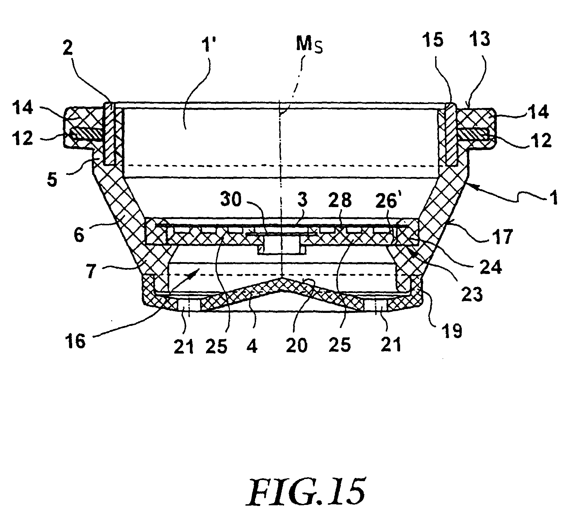

Die dritte Ausführungsform gemäß Figur 15 umfaßt eine Stützplate 25, die in ähnlicher Weise wie die Stützplatte in Figur 14 Labyrinthstege 28 umfaßt. Der Unterschied besteht darin, daß eine zylindrische Austrittsöffnung 29 vorhanden ist, die von einer kleinen Filterplatte 30 abgedeckt wird. Die Filterplatte 30 weist an ihrem Randbereich mehrere versetzt zueinander angeordnete Halteöffnungen 31 auf, in die Kunststoff der Stützplatte 25 zum Befestigen der Filterplatte 30 an der Stützplatte 25 eindringen kann. Im Mittenbereich der kleinen Filterplatte 30 sind drei dreiecksförmige Austrittsfilteröffnungen 32 angeordnet. Die dreiecksförmigen Austrittsöffnungen 32 sorgen ebenfalls für eine verstärkte Verwirbelung und Cremaausbildung insbesondere durch die vergrößerte Austrittsöffnung 29.

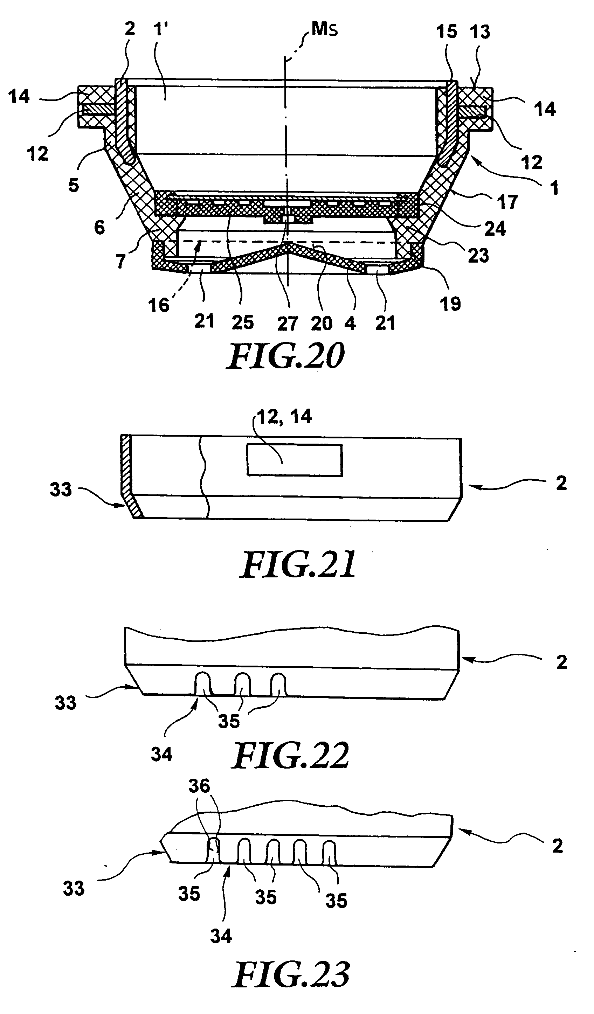

Die vierte Ausführungsform gemäß Figur 20 ähnelt der Ausführungsform gemäß der Figur 14. Hier ist der Verstärkungsring 2 jedoch aus einem Metalldruckguß hergestellt und die Verschlußstege 12 verschmelzen mit den Arretierstegen 14 zu einem einheitlichen Bauteil aus Metalldruckguß. Die Stege 12, 14 sind daher nicht mehr von einem Kunststoff umgeben. Des weiteren läßt sich dieses Bauteil sehr einfach herstellen, da dies mit entsprechend hohen Stückzahlen hergestellt wird.

Gemäß der Variante in Figur 21 weist der untere Randbereich 33 des Verstärkungsringes 2 eine konische Ausbildung auf, so daß dieser Bereich im konischen Bereich 6 des Kaffeeaufnahmebehälters 1 eingebettet ist und somit eine Verankerung darstellt.

Entsprechend der Figur 22 und 23 kann der untere Randbereich 33 noch eine Verzahnung 34 aufweisen, die durch Aussparungen 35 im unteren Randbereich 33 gebildet sind. Gemäß der Ausführungsform in Figur 23 wird die Verzahnung 34 im noch warmplastischen Zustand vom Metalldruckgußvorgang durch einen entsprechend ausgeformten Stempel gestaucht, so daß zusätzlich noch Hinterschneidungen 36 gebildet werden, die die Arretierung in dem Kunststoff nochmals verbessern.

Diese verschiedenen Ausführungen des unteren Randbereiches 33 des Verstärkungsringes 2 läßt sich selbstverständlich auf alle beschriebenen Ausführungsformen des Verstärkungsringes 2 anwenden.

## Patentansprüche

1. Espressobrühkopfeinheit mit Verschlußeinrichtungen (12) zum lösbaren Befestigen an einer Brüheinheit einer Espressomaschine, mit einem topfförmigen Kaffeeaufnahmebehälter (1) aus Kunststoff, an dessen Boden eine Filterplatte (3) mit Kaffeeaustrittsöffnungen (11) vorgesehen ist und in dessen oberen Randbereich (5) der Seitenwandung im wesentlichen umlaufend ein Verstärkungsring (2) aus einem stabilen Werkstoff, bevorzugt Metall, fest eingebettet ist und der Verstärkungsring (2) Anformungen (14) aufweist, die Bestandteil der Verschlußeinrichtungen (12) sind.

2. Espressobrühkopfeinheit nach Anspruch 1,
**dadurch gekennzeichnet,**
daß der Verstärkungsring (2) durch den Spritzgußvorgang des Kaffeeaufnahmebehälters (1) in den Randbereich (5) eingebettet ist.

3. Espressobrühkopfeinheit nach Anspruch 1 oder 2,
**dadurch gekennzeichnet,**
daß die Verschlußeinrichtungen (12) als radial von der Außenwandung (5, 6, 7) des Verstärkungsrings (2) abstehende Vorsprünge (12) ausgebildet sind, die Bestandteil eines bajonettartigen Verschlusses mit der Brüheinheit der Espressomaschine sind.

4. Espressobrühkopfeinheit nach Anspruch 1 oder 3,
**dadurch gekennzeichnet,**
daß der Verstärkungsring (2) im wesentlichen die Form eines zylindrischen Rohres aufweist.

5. Espressobrühkopfeinheit nach Anspruch 4,
**dadurch gekennzeichnet,**
daß der Randbereich (5) ebenfalls einen kreisringförmigen Querschnitt aufweist und der Verstärkungsring (2) koaxial zum Randbereich (5) angeordnet ist.

6. Espressobrühkopfeinheit nach einem der Ansprüche 1 bis 5,
**dadurch gekennzeichnet,**
daß die nach oben weisende Randkante (15) des Verstärkungsrings (2) über den oberen Rand (13) des Kaffeeaufnahmebehälters (1) übersteht.

7. Espressobrühkopfeinheit nach einem der Ansprüche 1 bis 6,
**dadurch gekennzeichnet,**
daß die unterhalb des oberen Randes (13) des Kaffeeaufnahmebehälters (1) angeordnete Innenseite des Verstärkungsrings (2) vollflächig mit einer Kunststoffschicht abgedeckt ist.

8. Espressobrühkopfeinheit nach einem der Ansprüche 1 bis 7,
**dadurch gekennzeichnet,**
daß die unterhalb des oberen Randes (13) des Kaffeeaufnahmebehälters (1) angeordnete Außenseite des Verstärkungsrings (2) einschließlich der Anformungen (14) im wesentlichen vollflächig mit einer Kunststoffschicht abgedeckt ist.

9. Espressobrühkopfeinheit nach einem der Ansprüche 1 bis 8,
**dadurch gekennzeichnet,**
daß die Anformungen (14) am Verstärkungsring (2) als im wesentlichen kreisbogenförmige Arretierstege (14) ausgebildet sind, die im wesentlichen senkrecht auf der Außenfläche des Verstärkungsrings (2) angeordnet sind und radial abstehen.

10. Espressobrühkopfeinheit nach einem der Ansprüche 1 bis 9,
**dadurch gekennzeichnet,**
daß die bevorzugt aus Metall bestehende Filterplatte (3) mit ihrem Randbereich (9) durch Spritzgießen in der Seitenwandung (5, 6 ,7) des Kaffeeaufnahmebehälters (1) eingebettet ist.

11. Espressobrühkopfeinheit nach einem der Ansprüche 1 bis 10,
**dadurch gekennzeichnet,**
daß der Rand (9) der Filterplatte (3) in einem separaten Kunststoffrahmen (24) eingebettet ist, der in einem umlaufenden Stufenabsatz (23) auf der Innenseite des Kaffeeaufnahmebehälters (1) eingesetzt ist.

12. Espressobrühkopfeinheit nach Anspruch 11,
**dadurch gekennzeichnet,**
daß der Kunststoffrahmen (24) fest mit dem Kaffeeaufnahmebehälter (1) verbunden ist.

13. Espressobrühkopfeinheit nach einem der Ansprüche 1 bis 12,
**dadurch gekennzeichnet,**
daß unterhalb der Filterplatte (3) eine Stützplatte (25), insbesondere eine Labyrinthplatte, angeordnet ist, die ebenfalls von dem Kunststoffrahmen (24) gehaltert ist.

14. Espressobrühkopfeinheit nach einem der Ansprüche 1 bis 12,
**dadurch gekennzeichnet,**
daß zur Vergrößerung der Auflagefläche des Stufenabsatzes (23) die Innenwandung des Kaffeeaufnahmebehälters (1) eine umlaufende Stützrippe (8) bildet.

15. Espressobrühkopfeinheit nach einem der Ansprüche 1 bis 12,
**dadurch gekennzeichnet,**
daß unterhalb der Filterplatte (3) der Kaffeeaufnahmebehälter (1) rohrförmig ausgebildet ist und/oder einen nach unten weisenden Ringsteg (18) aufweist, auf den eine Verteilerscheibe (4) mit einem Aufsteckkragen (19) aufgesetzt ist, die eine gewünschte Anzahl an Auslaßöffnungen (21) aufweist.

16. Espressobrühkopfeinheit nach einem der Ansprüche 1 bis 15,
**dadurch gekennzeichnet,**
daß seitlich an der Außenfläche des Kaffeeaufnahmebehälters (1) ein im wesentlich radial abstehendes Griffteil (22) angeordnet ist.

17. Espressobrühkopfeinheit nach einem der Ansprüche 1 bis 16,
**dadurch gekennzeichnet,**
daß der Kunststoffwerkstoff ein verstärkter, insbesondere glasverstärkter, Kunststoff ist.

18. Espressobrühkopfeinheit nach einem der Ansprüche 1 bis 17,
**dadurch gekennzeichnet,**
daß der Verstärkungsring (2) aus einem Metalldruckguß besteht.

19. Espressobrühkopfeinheit nach einem der Ansprüche 2 bis 18,
**dadurch gekennzeichnet,**
daß der Verstärkungsring (2) an seinem unteren Randbereich (33) Verankerungsmittel zum Verankern im Kunststoff aufweist.

20. Espressobrühkopfeinheit nach Anspruch 19,
**dadurch gekennzeichnet,**
daß die Verankerungsmittel durch eine konische Ausformung der Innen- und/oder Außenseite des unteren Randbereichs (33) gebildet sind.

21. Espressobrühkopfeinheit nach Anspruch 19 oder 20,
**dadurch gekennzeichnet,**
daß als Verankerungsmittel eine Verzahnung (34) am unteren Randbereich (33) vorgesehen ist.
